# EUROPEAN PATENT APPLICATION

(11) **EP 3 584 859 A1**
(43) Date of publication of application: **25.12.2019**
(21) Application number: 18744646.3
(22) Date of filing: 24.01.2018
(51) Int. Cl.: H01M 4/13, H01M 2/16

(54) **ELECTRODE BODY, ELECTRODE GROUP, SECONDARY BATTERY, BATTERY MODULE AND VEHICLE**

(30) Priority: 24.01.2017 JP 2017010373
(71) Applicant: Kabushiki Kaisha Toshiba, Minato-ku Tokyo 105-8001 (JP)
(72) Inventor: TANAKA, Masanori, Tokyo 105-8001 (JP); SATO, Asako, Tokyo 105-8001 (JP); WATANABE, Hidetoshi, Tokyo 105-8001 (JP)
(74) Representative: Moreland, David
(86) International application number: PCT/JP2018/002155
(87) International publication number: WO 2018/139493

(57) **Abstract**

An electrode body, an electrode group, a secondary battery, a battery module, and a vehicle that are excellent in input/output characteristics are provided.

An electrode body according to embodiments described herein has a current collector, an electrode mixture layer on the current collector, and an inorganic particle-containing layer containing inorganic particles and a binder on the electrode mixture layer, and a binder of the inorganic particle-containing layer is segregated on a side of the electrode mixture layer.

## Description

### [Technical Field]

Embodiments described herein relate to an electrode body, an electrode group, a secondary battery, a battery module, and a vehicle.

### [Background Art]

In recent years, for power sources of electric vehicles such as hybrid electric vehicles and plug-in electric vehicles that are rapidly spreading, chargeable/dischargeable secondary batteries such as lithium ion secondary batteries are mainly used. A lithium ion secondary battery is manufactured by, for example, a method described below. After producing an electrode group in which a positive electrode and a negative electrode are wound via a separator, this electrode group is housed in a case made from metal such as aluminum or aluminum alloy. Next, a lid is welded to an opening of the case, a non-aqueous electrolytic solution is poured into the case from a liquid inlet provided on the lid, and then a sealing member is welded to the liquid inlet to produce a battery unit. Thereafter, this battery unit is subjected to an initial charge and an aging treatment to obtain a lithium ion secondary battery (secondary battery).

In this secondary battery, in order to extend a cruising distance of an electric vehicle, an increase in energy density is required. In addition, since acceleration performance is also required, it is also necessary to reduce resistance such that a large current can be charged and discharged to obtain excellent input/output characteristics. In order to improve the both characteristics, a separator has been thinned, and a porosity has been improved. However, in order to secure a sufficient tensile strength, a thin separator has a higher density, and a porosity becomes smaller. One of countermeasures for that is to form a separator directly on an electrode by a method such as application. If inorganic particles are applied using, for example, a gravure roll, thinning is possible, but there is a problem that an inorganic separator peels off during vibration or expansion and contraction of an active material unless an amount of a binder is increased. In addition, when an amount of a binder is increased to such an extent that an inorganic separator does not peel, a porosity of an inorganic separator is reduced, which causes a problem of causing an increase in resistance.

Therefore, there is a demand for establishing a method for achieving improvement in both insulation properties and large current characteristics while thinning a separator.

### [Citation List]

### [Patent Literature]

[Patent Literature 1] Japanese Patent Application Laid-Open No.H10-12220 A

### [Summary of Invention]

### [Technical Problem]

Embodiments described herein provide an electrode body, an electrode group, a secondary battery, a battery module, and a vehicle that are excellent in input/output characteristics.

### [Solution to Problem]

An electrode body according to embodiments described herein has a current collector, an electrode mixture layer on the current collector, and an inorganic particle-containing layer containing inorganic particles and a binder on the electrode mixture layer, and a binder of the inorganic particle-containing layer is segregated on a side of the electrode mixture layer.

### [Brief Description of Drawings]

[FIG. 1] FIG. 1 is a cross-sectional conceptual view of an electrode body according to a first embodiment of the present invention.
[FIG. 2] FIG. 2 is a cross-sectional conceptual view of an electrode group according to a second embodiment.
[FIG. 3] FIG. 3 is a perspective view for illustrating external appearance of a secondary battery according to a third embodiment.
[FIG. 4] FIG. 4 is a development perspective view of the secondary battery of FIG. 3.
[FIG. 5] FIG. 5 is a perspective view of a lid of the secondary battery of FIG. 3.
[FIG. 6] FIG. 6 is a side view for illustrating an inside of the secondary battery of FIG. 3.
[FIG. 7] FIG. 7 is a development view for illustrating a wound-type electrode group of the secondary battery of FIG. 3.
[FIG. 8] FIG. 8 is a perspective development view of a battery module according to a fourth embodiment.
[FIG. 9] FIG. 9 is a cross-sectional view of the battery module according to the fourth embodiment.
[FIG. 10] FIG. 10 is a conceptual view of a power storage device according to a fifth embodiment.
[FIG. 11] FIG. 11 is a conceptual view of a vehicle according to a sixth embodiment.
[FIG. 12] FIG. 12 is a conceptual view of the vehicle according to the sixth embodiment.
[FIG. 13] FIG. 13 is a conceptual view of a flying object according to a seventh embodiment.

### [Description of Embodiments]

Hereinafter, embodiments will be described with reference to the drawings. In descriptions below, components having identical or similar functions are denoted by identical reference numerals throughout all the drawings, and redundant descriptions will be omitted. The drawings each are schematic views for promoting description and understanding of the embodiments, and their shapes, sizes, ratios and the like are different in some ways from those of actual devices but may be accordingly changed in design considering descriptions below and publicly known techniques.

### (First Embodiment)

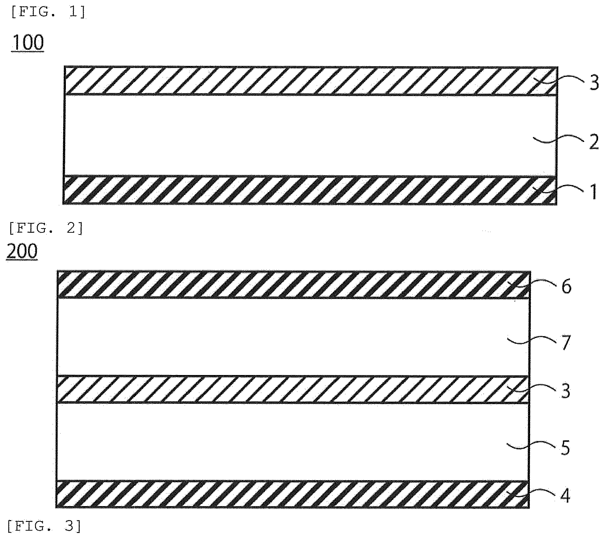

A first embodiment relates to an electrode body. An electrode body according to the first embodiment includes, for example, an electrode, either a positive electrode or a negative electrode used in a secondary battery, and an inorganic particle-containing layer that separates a positive electrode from a negative electrode and has an ion conductivity between the positive and the negative electrodes. An electrode according to the first embodiment has a current collector and an electrode mixture layer on the current collector. A cross-sectional conceptual view of an electrode body 100 according to the first embodiment is illustrated in FIG. 1. The electrode body 100 of FIG. 1 has a current collector 1, an electrode with an electrode mixture layer 2, and an inorganic particle-containing layer 3 on the electrode. The electrode mixture layer 2 has two regions, a first region 2A and a second region 2B. In FIG. 1, although the electrode mixture layer 2 is provided on one side of the current collector 1, a total of two electrode mixture layers 2 may be provided on both sides of the current collector 1. When the electrode mixture layer 2 is provided on both sides of the current collector 1, the inorganic particle-containing layer 3 is provided on both of the two electrode mixture layers 2.

The current collector 1 is a conductive material in contact with the electrode mixture layer 2. The electrode mixture layer 2 is present on the current collector 1. For the current collector 1, for example, a non-porous metal foil, a punched metal with a number of pores, and a metal mesh formed by molding metal thin wires can be used. As the current collector 1, for example, a metal foil or an alloy foil can be used. Examples of metal foils may include aluminum foils, copper foils, and nickel foils. Examples of alloy foils may include aluminum alloys, copper alloys, and nickel alloys.

Materials of the current collector 1 are not particularly limited as long as they do not dissolve in a battery usage environment, and for example, metals such as Al or Ti, or alloys mainly composed of the metals and obtained by adding one or more elements in a group consisting of Zn, Mn, Fe, Cu, and Si can be used. In particular, an AI-based aluminum alloy foil is flexible and excellent in moldability, and thus a preferred thickness of the current collector 1 is most often preferably 5 µm or more and 20 µm.

At an end of the current collector 1, a non-coated portion where the electrode mixture layer 2 is not provided may be present. The inorganic particle-containing layer 3 may be present in a part of the non-coated portion where the electrode mixture layer 2 of the current collector 1 is not provided. It is preferred that the non-coated portion of the current collector 1 be subjected to, for example, pressure-welding to serve as an electrode current collecting tab.

The electrode mixture layer 2 is a layered substance containing an electrode active material. The electrode mixture layer 2 may further contain any of an electrode binder, a conductive material, or an electrode binder and a conductive material. A face of the electrode mixture layer 2 facing toward the current collector 1 is in physical and direct contact with a face of the current collector 1 facing the electrode mixture layer 2. Further, a face of the electrode mixture layer 2 facing the inorganic particle-containing layer 3 is in physical and direct contact with a face of the inorganic particle-containing layer 3 facing the electrode mixture layer 2. The face of the electrode mixture layer 2 facing toward the current collector 1 is a face, of faces of the electrode mixture layer 2, opposite to the face of the electrode mixture layer 2 facing the inorganic particle-containing layer 3.

The electrode mixture layer 2 is formed by, for example, applying a slurry containing a solvent and an electrode active material to the current collector 1 and drying it. In the slurry, in addition to an electrode active material, the electrode mixture layer 2 may further contain any of an electrode binder, a conductive material, or an electrode binder and a conductive material. As a solvent, for example, N-methyl pyrrolidone (NMP) is suitable. It is preferred that a slurry be prepared by adding and kneading, for example, an electrode active material to a solvent.

An electrode active material is not particularly limited, and any material can be used as long as it can be charged and discharged by inserting and desorbing ions of lithium or other alkali metals. Electrode active materials include two types, a positive electrode active material and a negative electrode active material.

Examples of what can be used as a positive electrode active material are not particularly limited. As a positive electrode active material, for example, various oxides and sulfides (chalcogen compounds) can be used. It is preferred that a positive electrode active material contain one or more compounds of a group consisting of, for example, lithium-containing cobalt oxide (e.g., LiCoO₂), manganese dioxide, lithium-manganese composite oxide (e.g., LiMn₂O₄, LiMnO₂), lithium-containing nickel oxide (e.g., LiNiO₂), lithium-containing nickel cobalt oxide (e.g., LiNi_{0.8}Co_{0.2}O₂), lithium-containing iron oxide, vanadium oxide containing lithium, and chalcogen compound such as titanium disulfide and molybdenum disulfide.

A positive electrode binder (second binder) has a function of binding a positive electrode active material and a positive electrode current collector. It is preferred that a positive electrode binder contain one or more organic substances of a group consisting of, for example, polytetrafluoroethylene (PTFE), polyvinylidene fluoride (PVdF), modified PVdF in which at least one of hydrogen or fluorine of PVdF is substituted with another substituent, a copolymer of vinylidene fluoride-6 propylene fluoride, a terpolymer of polyvinylidene fluoride-tetrafluoroethylene-6 propylene fluoride, and an acrylic resin.

A positive electrode conductive material is blended as necessary in order to enhance current collection performance and suppress a contact resistance between a positive electrode active material and a positive electrode current collector. As a positive electrode conductive material, any material having appropriate conductivity can be used. For example, it is preferred that one or more carbon materials of a group consisting of, for example, artificial graphite such as acetylene black and natural graphite be contained.

When an electrode is a positive electrode, it is preferable that a mixing ratio of a positive electrode active material, a conductive material, and a positive electrode binder in the entire electrode mixture layer 2 be 70% by mass or more and 96% by mass or less for a positive electrode active material, 3% by mass or more and 17% by mass or less for a conductive material, and 1% by mass or more and 13% by mass or less for a positive electrode binder. It is preferable that a positive electrode density (positive electrode charge density) be 2.8 g/cc or more and 3.3 g/cc or less from a viewpoint of increasing capacity and input/output characteristics.

A negative electrode active material is not particularly limited. It is preferred that a negative electrode active material contain one or more substances of a group consisting of, for example, a graphite material or a carbonaceous material (e.g., graphite, coke, carbon fiber, spherical carbon, pyrolytic gas-phase carbonaceous material, and resin fired body), chalcogen compound (e.g., titanium disulfide, molybdenum disulfide, and niobium selenide), light metal (e.g., aluminum, aluminum alloy, magnesium alloy, lithium, and lithium alloy), lithium titanium oxide (e.g., spinel type lithium titanate), silicon, and tin.

A negative electrode binder (second binder) has a function of binding a negative electrode active material and a negative electrode current collector. It is preferred that a negative electrode binder contain one or more organic substances of a group consisting of, for example, polytetrafluoroethylene (PTFE), polyvinylidene fluoride (PVdF), ethylene-propylene-diene copolymer (EPDM), styrene-butadiene rubber (SBR), carboxymethylcellulose (CMC), and acrylic resins.

A negative electrode conductive material is blended as necessary in order to enhance current collection performance and suppress a contact resistance between a negative electrode active material and a negative electrode current collector. As a negative electrode conductive material, for example, a carbon material can be used. It is preferred that a negative electrode conductive material contain one or more carbon materials of a group consisting of, for example, acetylene black, carbon black, coke, carbon fiber, and graphite.

When an electrode is a negative electrode, it is preferable that a mixing ratio of a negative electrode active material, a negative electrode conductive material, and a negative electrode binder in the entire electrode mixture layer 2 be 70% by mass or more and 96% by mass or less for a negative electrode active material, 2% by mass or more and 20% by mass or less for a conductive material, and 2% by mass or more and 10% by mass or less for a negative electrode binder. By setting an amount of a conductive material at 2% by mass or more, current collection performance of a negative electrode mixture layer can be improved. Further, by setting an amount of a negative electrode binder at 2% by mass or more, a binding property between a negative electrode mixture layer and a negative electrode current collector can be enhanced, and excellent cycle characteristics can be expected. On the other hand, it is preferred that a conductive material and a binder each be set at 28 % by mass or less to increase capacity. It is preferable that a negative electrode density (negative electrode charge density) be 2.0 g/cc or more and 2.3 g/cc or less from the viewpoint of increasing capacity and input/output characteristics.

The inorganic particle-containing layer 3 is bonded (bound) to a surface of the electrode mixture layer 2. The inorganic particle-containing layer 3 separates a positive electrode from a negative electrode and functions as a separator having an ion conductivity. The inorganic particle-containing layer 3 contains at least inorganic particles and a binder.

As inorganic particles, for example, one or more compounds selected from a group consisting of metal oxides such as aluminum oxide, titanium oxide, magnesium oxide, and zinc oxide and sulfates such as barium sulfate can be used. These metal oxides can exhibit excellent stability to electrolytes (non-aqueous electrolytes) contained in a secondary battery.

A binder contained in the inorganic particle-containing layer 3 contains one or more types of binders selected from a group consisting of a water-soluble binder, a binder dispersed in water, and a binder containing fluorine. It is preferred that a binder contained in the inorganic particle-containing layer 3 be either a fluorine-containing binder or a water-soluble binder and a binder dispersed in water.

A water-soluble binder is a binder that can dissolve by 1 g or more in 100 g of water. Such binders may include, for example, a polymer of either one or both of polyvinyl alcohol (PVA) and carboxymethyl cellulose (CMC).

A binder dispersed in water is a binder that is difficult to dissolve in water but can form an emulsion in water to form an aqueous dispersion. A binder difficult to dissolve in water is a polymer that dissolves by less than 2 g in 100 g of water at 25°C. A binder that forms an emulsion in water has a polar group. Due to presence of this polar group, the binder is a polymer that forms an emulsion of which surface exhibits hydrophilicity while inside exhibits hydrophobicity. Such binders may include, for example, a poorly water-soluble polymer of either or both of styrene butadiene rubber (SBR) and an acrylic polymer. In the embodiment, from a viewpoint of improving cycle characteristics, it is preferred that an acrylic polymer having a strong binding force be used as a poorly water-soluble polymer. The inorganic particle-containing layer 3 containing a binder dispersible in water can provide point adhesion with an electrode layer and exhibit excellent peeling strength to an electrode mixture layer. Thus, it is preferred that a binder dispersible in water be contained at least in a face of the inorganic particle-containing layer 3 in contact with the electrode mixture layer 2.

It is preferred that a fluorine-containing binder be a fluorine resin of either one or both of polytetrafluoroethylene (PTFE) and polyvinylidene fluoride (PVdF).

It is preferred that the inorganic particle-containing layer 3 have a thickness of 1 µm or more and 10 µm or less. When the inorganic particle-containing layer 3 is too thin, a positive electrode and a negative electrode are likely to be short circuited, which is not preferred. In addition, when the inorganic particle-containing layer 3 is too thick, an ion conductivity is lowered, and a battery capacity density is lowered, which is not preferred. For these reasons, it is more preferred that the thickness of the inorganic particle-containing layer 3 be 2 µm or more and 8 µm or less.

It is preferred that an average ratio of inorganic particles contained in the inorganic particle-containing layer 3 and a binder contained in the inorganic particle-containing layer 3 be in a range between 90% by mass or more and 99% by mass or less for inorganic particles and in a range between 1% by mass or more and 10% by mass or less for a binder. These concentration ranges are average values of the entire inorganic particle-containing layer 3. It is more preferred that a minimum ratio of a binder contained in the inorganic particle-containing layer 3 be 0.5% by mass or more.

It is preferred that a porosity of the inorganic particle-containing layer 3 be 30% or more and 80% or less. A porosity is a porosity of only an inorganic particle-containing layer and does not include an underlying electrode layer. A porosity is a ratio of a volume of pores other than inorganic particles and a binder to a volume of an inorganic particle-containing layer. When a porosity is too low, an initial resistance is likely to increase, which is not preferred. Moreover, when a porosity is too high, a short circuit is likely to be caused between a positive electrode and a negative electrode, which is not preferred. The porosity of the inorganic particle-containing layer 3 can be derived by a mercury intrusion method, for example.

When an amount of a binder in the inorganic particle-containing layer 3 is too small, in producing a wound-type electrode group, a separator breaks in an R portion, and a short circuit is likely to occur between a positive and a negative electrodes, which causes a decrease in yield and safety. On the other hand, when an amount of a binder is too large, a large amount of a binder is present in the inorganic particle-containing layer 3, so that a porosity of the inorganic particle-containing layer 3 becomes small, leading to an increase in initial resistance.

It is preferred that a binder of the inorganic particle-containing layer 3 be segregated on a side of the electrode mixture layer 2. In other words, in a vicinity of a contact face between the inorganic particle-containing layer 3 and the electrode mixture layer 2, it is preferred that a binder concentration in the inorganic particle-containing layer 3 be higher than in a vicinity of a surface, or in a vicinity of a face opposite to an interface between the inorganic particle-containing layer 3 and the electrode mixture layer 2. This is preferred because when a binder concentration in the inorganic particle-containing layer 3 is high in the vicinity of the interface between the inorganic particle-containing layer 3 and the electrode mixture layer 2, a binding property between the inorganic particle-containing layer 3 and the electrode mixture layer 2 is enhanced. If a binder concentration is high as a whole, as described above, the porosity of the inorganic particle-containing layer 3 decreases, which is not preferred.

After cutting the inorganic particle-containing layer 3 with a surface/interfacial cutting analysis system (SAICAS), in performing an X-ray photoelectron spectroscopy (XPS) measurement, assuming that a C area strength (area strength of C-C/H and O-C = O peaks of a C1s spectrum) in the vicinity of the surface is C_{A}, and the C area strength in the vicinity of the interface (in the vicinity of the interface between the electrode mixture layer 2 and the inorganic particle-containing layer 3) is C_{B}, it is preferred that C_{B}/C_{A} be 1.2 or more and 10 or less. Here, a C area strength is an area strength of the C-C/H and O-C = O peaks appearing at 290 eV to 280 eV of the C1s spectrum in the XPS measurement. More specifically, in the inorganic particle-containing layer 3 included in the electrode body 100, a binder is segregated at the interface between the inorganic particle-containing layer 3 and the electrode mixture layer 2, so that peeling of the inorganic particle-containing layer 3 due to expansion and contraction of an electrode active material is unlikely to occur. Moreover, with this type of configuration, a binder used in the inorganic particle-containing layer 3 covers a surface of an electrode active material and works like a film, so that it is possible to suppress an increase in resistance during cycle tests. When C_{B}/C_{A} is less than 1.2, a binder in the inorganic particle-containing layer 3 is not segregated on the side of the electrode mixture layer 2, or a binder in the inorganic particle-containing layer 3 is not substantially segregated on the side of the electrode mixture layer 2. Therefore, when a cycle test is performed, a resistance is likely to increase, which is not preferred. In addition, when C_{B}/C_{A} is larger than 10, the inorganic particle-containing layer 3 is likely to peel, which is not preferred. For reasons similar to the above, it is more preferred that C_{B}/C_{A} be 2.02 or more and 9.98 or less.

After cutting the inorganic particle-containing layer 3 with the SAICAS, in performing the XPS measurement, assuming that the C area strength in the vicinity of the surface of the inorganic particle-containing layer 3 is C_{A}, the C area strength in the vicinity of the interface of the inorganic particle-containing layer 3 (in the vicinity of the interface between the electrode mixture layer 2 and the inorganic particle-containing layer 3) is C_{B}, and the C area strength at a middle point between the surface of the inorganic particle-containing layer 3 and the interface of the inorganic particle-containing layer 3 is C_{C}, it is preferred that (C_{C}-C_{B})/(C_{A}-C_{B}) be 0.10 or more and 0.50 or less. Similarly, the C area strength at the middle point is also cut with the SAICAS and measured by the XPS. In other words, since the inorganic particle-containing layer 3 has a binder gradient from the vicinity of the surface to the middle point in the inorganic particle-containing layer 3, an amount of a binder in the vicinity of the interface is larger to suppress peeling of an inorganic particle-containing layer. As a result, an initial resistance can be reduced, and lifetime characteristics can be improved. It is not preferred that a binder have a gradient from the middle point in the inorganic particle-containing layer 3 to the vicinity of the contact face on the side of the electrode mixture layer 2. When (C_{C}-C_{B}) / (C_{A}-C_{B}) is less than 0.10, an amount of a binder in the vicinity of the interface relatively decreases, and an inorganic particle-containing layer is likely to peel from an electrode layer. Further, when (C_{C}-C_{B})/(C_{A}-C_{B}) is larger than 0.5, an amount of a binder in the vicinity of the interface increases, and an electrode surface is covered with a binder, so that an initial resistance increases. It is more preferred that (C_{C}-C_{B}) / (C_{A}-C_{B}) be 0.10 or more and 0.44 or less.

The electrode body 100 having the inorganic particle-containing layer 3 with this sort of binder concentration gradient characteristics can realize a secondary battery that exhibits excellent lifetime characteristics.

When the inorganic particle-containing layer 3 contains a binder containing fluorine, an F area strength (area strength of an F-C peak of an F1s spectrum) is also similar to the C area strength. Assuming that the F area strength in the vicinity of the surface of the inorganic particle-containing layer 3 is F_{A} and the F area strength in the vicinity of the interface of the inorganic particle-containing layer 3 is F_{B}, F_{B}/F_{A} is 1.2 or more and 20 or less. Here, an F area strength is an area strength of the F-C peak appearing at 690 eV to 680 eV of the F1s spectrum in the XPS measurement. In the inorganic particle-containing layer 3 included in the electrode body 100, a binder is segregated at the interface between the inorganic particle-containing layer 3 and the electrode mixture layer 2, so that peeling of the inorganic particle-containing layer 3 due to expansion and contraction of an electrode active material is unlikely to occur. Moreover, with this type of configuration, a binder used in the inorganic particle-containing layer 3 covers a surface of an electrode active material and works like a film, so that it is possible to suppress an increase in resistance during cycle tests. For these reasons, it is more preferred that F_{B}/F_{A} be 1.2 or more and 15 or less, and it is further more preferred that F_{B}/F_{A} be 2.8 or more and 15 or less.

Measurement positions of these C_{A}, C_{B}, C_{C}, F_{A}, and F_{B} are, at a center of the electrode body 100 in a width direction (short side direction), 100 mm, 200 mm, 300 mm, 400 mm, and 500 mm from an end of the electrode body 100 toward a length direction (long side direction). Average values of the five measurement points are C_{A}, C_{B}, C_{C}, F_{A}, and F_{B} described above.

The vicinity of the interface between the inorganic particle-containing layer 3 and the electrode mixture layer 2 is a region to a depth of 5 nm from a face (interface) of the inorganic particle-containing layer 3 facing the electrode mixture layer 2 and in direct contact with the electrode mixture layer 2 toward a face opposite to the face of the inorganic particle-containing layer 3 in direct contact with the electrode mixture layer 2. The vicinity of the interface between the inorganic particle-containing layer 3 and the electrode mixture layer 2 is subjected to the XPS measurement while cutting with the SAICAS, and an area where an element (e.g., Ti) contained in the electrode mixture layer 2 and not contained in the inorganic particle-containing layer 3 is confirmed by a wide spectrum is assumed to be a face where the inorganic particle-containing layer 3 faces toward the electrode mixture layer 2 and is in direct contact with the electrode mixture layer 2. It is preferred that an element contained in the electrode mixture layer 2 and not contained in the inorganic particle-containing layer 3 be subjected to elemental analysis of the electrode mixture layer 2 and the inorganic particle-containing layer 3 in advance.

The vicinity of the surface of the inorganic particle-containing layer 3 is a region to a depth of 5 nm from the face (surface) opposite to the face of the inorganic particle-containing layer 3 in direct contact with the electrode mixture layer 2 toward the face of the inorganic particle-containing layer 3 in direct contact with the electrode mixture layer 2. When the electrode mixture layer 2 is provided on both sides of the inorganic particle-containing layer 3, the C area strengths of both sides are measured, and a region of which the C area strength is higher is the vicinity of the interface. On the other hand, a region of which the C area strength is lower is the vicinity of the surface. A portion where a signal strength of inorganic particles (e.g., Al) starts to decrease by cutting by the SAICAS and continuously performing the XPS measurement in a line from uncut portions is taken as the surface of the inorganic particle-containing layer 3. It is preferred that the inorganic particle-containing layer 3 be subjected to elemental analysis in advance.

The middle point of the inorganic particle-containing layer 3 is a region, from the face of the inorganic particle-containing layer 3 in direct contact with the electrode mixture layer 2 toward the face opposite to the face of the inorganic particle-containing layer 3 in direct contact with the electrode mixture layer 2, from a depth of one-half of thickness of the inorganic particle-containing layer 3 to a depth of 5 nm toward the face opposite to the face of the inorganic particle-containing layer 3 in direct contact with the electrode mixture layer 2. It is preferred that the thickness of the inorganic particle-containing layer 3 be separately determined by microscopic observation of a cross section.

Measurement positions of these C_{A}, C_{B}, C_{C}, F_{A}, and F_{B} are, at a center of the electrode body 100 in a width direction (short side direction), 100 mm, 200 mm, 300 mm, 400 mm, and 500 mm from an end of the electrode body 100 toward a length direction (long side direction). Average values of the five measurement points are C_{A}, C_{B}, C_{C}, F_{A}, and F_{B} described above.

The inorganic particle-containing layer 3 is formed by, for example, applying a slurry containing inorganic particles, a binder, and a solvent to the electrode mixture layer 2 and drying it. In order to segregate the binder concentration, for example, a method of application and drying using two or more kinds of slurries different in binder concentration can be used. In addition, in order to segregate the binder concentration, the electrode according to the embodiment may be produced by, for example, applying a slurry containing inorganic particles, a binder, and a solvent to the electrode mixture layer 2 and adjusting drying conditions. As a solvent, for example, N-methyl-2-pyrrolidone is suitable.

### (Second Embodiment)

A second embodiment relates to an electrode group. The electrode group according to the second embodiment is a laminate of a positive electrode, an inorganic particle-containing layer, and a negative electrode. A cross-sectional conceptual view of an electrode group 200 according to the second embodiment is illustrated in FIG. 2. The electrode group 200 of FIG. 2 includes a positive electrode including a positive electrode mixture layer 4 and a positive electrode current collector 5, a negative electrode including a negative electrode mixture layer 6 and a negative electrode current collector 7, and the inorganic particle-containing layer 3 sandwiched between the positive electrode and the negative electrode.

A binder of the inorganic particle-containing layer 3 of the electrode group 200 is unevenly distributed on a side of the positive electrode mixture layer 4 or a side of the negative electrode mixture layer 6. Thus, when the binder of the inorganic particle-containing layer 3 is unevenly distributed on the side of the positive electrode mixture layer 4, the electrode mixture layer 2 according to the first embodiment corresponds to the positive electrode mixture layer 4. In addition, when the binder of the inorganic particle-containing layer 3 is unevenly distributed on the side of the negative electrode mixture layer 6, the electrode mixture layer 2 according to the first embodiment corresponds to the negative electrode mixture layer 6. The positive electrode and the negative electrode according to the second embodiment are the electrode according to the first embodiment. Except that the electrodes are present on both sides of the inorganic particle-containing layer 3 and whether the binder of the inorganic particle-containing layer 3 is unevenly distributed on a side of the positive electrode or on a side of the negative electrode, the electrode group according to the second embodiment is in common with the electrode body 100 according to the first embodiment.

Also in the electrode group 200 according to the second embodiment, a binding property between the inorganic particle-containing layer 3 and the electrode on a side where the binder of the inorganic particle-containing layer 3 is unevenly distributed is enhanced, and thus a secondary battery using the electrode group 200 is preferred in that an initial resistance is reduced and the lifetime characteristics are improved.

### (Third Embodiment)

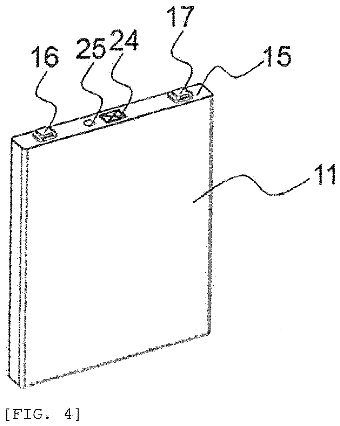

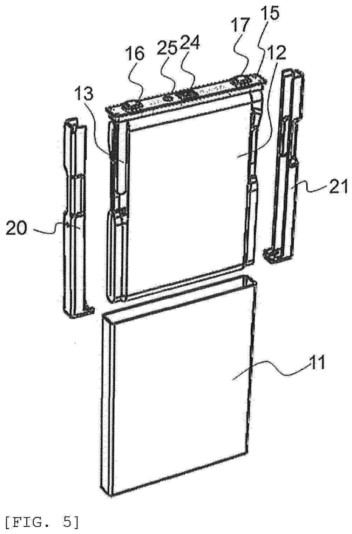

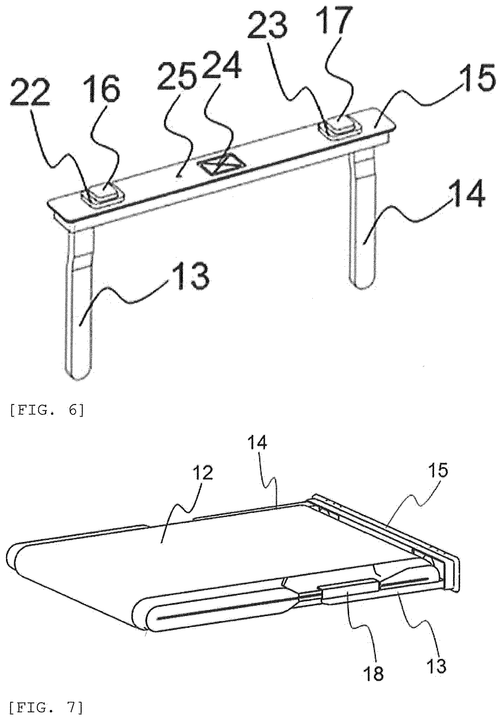

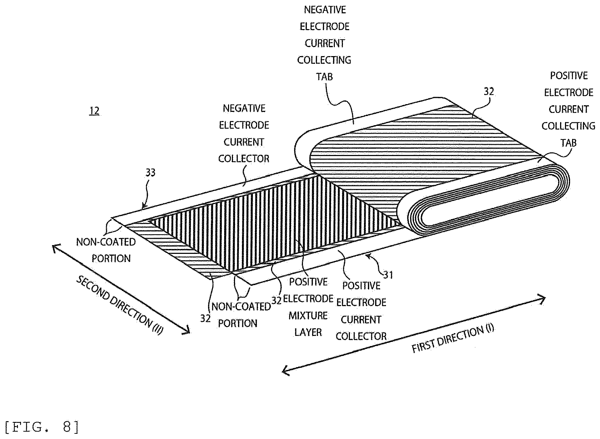

A third embodiment relates to a secondary battery. The secondary battery according to the third embodiment has a positive electrode having a positive electrode mixture layer and a positive electrode current collector, a negative electrode having a negative electrode mixture layer and a negative electrode current collector, and an electrolyte. As an example of the secondary battery according to the first embodiment, FIG. 3 illustrates external appearance of a secondary battery 300, FIG. 4 illustrates a development perspective view of the secondary battery 300, FIG. 5 illustrates a perspective view of a lid of the secondary battery 300, and FIG. 6 illustrates a side view of an inside of the secondary battery 300. FIG. 7 illustrates a development view of a wound-type electrode group 12. As illustrated in FIGS. 3 to 7, the secondary battery 300 includes an exterior material 11, the wound-type electrode group 12 in a flat shape, a positive electrode lead 13, a negative electrode lead 14, a lid 15, a positive electrode terminal 16, a negative electrode terminal 17, a positive electrode backup lead 18, a negative electrode backup lead 19, a positive electrode insulating cover 20, a negative electrode insulating cover 21, a positive electrode gasket 22, a negative electrode gasket 23, a safety valve 24, an electrolyte inlet 25, and an electrolyte (not illustrated). It is preferred that the electrolyte be present in the exterior material 11 and filled in the exterior material 11. FIG. 3 illustrates a secondary battery in, but not limited to, a square shape. It is preferred that the secondary battery according to the third embodiment include the electrode group 200 according to the second embodiment.

The exterior material 11 includes, for example, a laminate film or a metal container. Shapes may include, for example, flat, square, cylinder, coin, button, sheet, or laminate.

As a laminate film, a multilayer film in which a metal layer is interposed between resin films can be used. It is preferred that a metal layer be an aluminum foil or an aluminum alloy foil for weight saving. For a resin film, polymer materials such as polypropylene (PP), polyethylene (PE), nylon, and polyethylene terephthalate (PET) can be used. A laminated film can be sealed by thermal fusion bonding and formed into a shape of an exterior material. It is preferred that a thickness of a laminate film be 0.2 mm or less, for example.

For a metal container, for example, aluminum, aluminum alloy, iron, or stainless steel can be used. For the lid 15, for example, aluminum, aluminum alloy, iron, or stainless steel can be used. It is preferable that the lid 15 and the exterior material 11 be formed of an identical type of metal. It is preferred that a thickness of a metallic container be 0.5 mm or less, for example.

Next, the wound-type electrode group 12 will be described in more detail with reference to the development view of the wound-type electrode group 12 illustrated in FIG. 7. The development view of FIG. 7 illustrates a structure where a laminate with a positive electrode 31, an inorganic particle-containing layer 32, and a negative electrode 33 laminated is wound. Although FIG. 7 illustrates an electrode group before a current collector tab is bundled before being pressed, a current collecting tab of the wound-type electrode group 12 housed in the exterior material 11 is bundled and electrically connected to the positive electrode terminal 16 or the negative electrode terminal 17 via a lead. The wound-type electrode group 12 is illustrated in, but not limited to, a flat shape, and an electrode group in other shapes can be used. The positive electrode 20, the inorganic particle-containing layer 32, and the negative electrode 33 extend in a first direction (I) and have a band shape with a width in a second direction (II) orthogonal to this first direction. It is preferred that the wound-type electrode group 12 be housed in the exterior material 11 so as to face in a direction perpendicular to a winding axis.

The wound-type electrode group 12 is a lamination formed through, for example, further winding of a band-shaped laminate obtained by laminating the band-shaped positive electrode 31, the band-shaped inorganic particle-containing layer 32, and the band-shaped negative electrode 33. The inorganic particle-containing layer 32 is present between a mixture layer on a current collector of the positive electrode 31 and a mixture layer on a current collector of the negative electrode 33 and is sandwiched between the mixture layers of the positive electrode 31 and the negative electrode 33. It is preferred that the inorganic particle-containing layer 32 be present on the mixture layer of the positive electrode 31, the mixture layer of the negative electrode 33, or the mixture layer of the positive electrode 31 and the mixture layer of the negative electrode 33 and in physical and direct contact therewith. When the inorganic particle-containing layer 32 is present on the mixture layer of the positive electrode 31 and the mixture layer of the negative electrode 33, the inorganic particle-containing layer 32 is present between the positive electrode mixture layer and the negative electrode mixture layer and on the positive electrode current collector or on the negative electrode current collector. The inorganic particle-containing layer 32 present on the positive electrode current collector is provided in contact with the positive electrode current collector along the positive electrode mixture layer on the positive electrode current collector. A region where the positive electrode mixture layer on the positive electrode current collector, or the positive electrode mixture layer and the inorganic particle-containing layer 32 are provided is a coated portion, and a region where neither the positive electrode mixture layer on the positive electrode current collector nor the inorganic particle-containing layer 32 is provided is a non-coated portion. The non-coated portion of the positive electrode current collector serves as a positive electrode current collector tab. The inorganic particle-containing layer 32 present on the negative electrode current collector is provided in contact with the negative electrode current collector along the negative electrode mixture layer on the negative electrode current collector. A region where the negative electrode mixture layer on the negative electrode current collector, or the negative electrode mixture layer and the inorganic particle-containing layer 32 are provided is a coated portion, and a region where none of the negative electrode mixture layer on the negative electrode current collector and the inorganic particle-containing layer 32 are provided is a non-coated portion. The non-coated portion of the negative electrode current collector serves as a negative electrode current collector tab. The positive electrode 31, the positive electrode current collector, the positive electrode mixture layer, the negative electrode 33, the negative electrode current collector, the negative electrode mixture layer, and the inorganic particle-containing layer 32 are all band-shaped.

The positive electrode 31 and the negative electrode 33 are laminated and wound after being produced, respectively, to produce the wound-type electrode group 12. Therefore, even when the wound-type electrode group 12 is decomposed, the inorganic particle-containing layer 32 formed in producing the positive electrode 31 is present on the positive electrode mixture layer, and the inorganic particle-containing layer 32 formed in producing the negative electrode 33 is present on the negative electrode mixture layer. Note that winding is performed while adjusting positions such that a face of the positive electrode mixture layer faces a face of the negative electrode mixture layer, that is, a non-facing portion does not occur in the positive electrode 31. It is preferred that a layer at an outermost periphery of the wound-type electrode group 12 be fixed with an insulating tape that is not illustrated.

A positive electrode current collecting tab is bundled by the positive electrode backup lead 18 and electrically connected to the positive electrode terminal 16 via the positive electrode lead 13. A negative electrode current collecting tab is bundled by the negative electrode backup lead 19 and electrically connected to the negative electrode terminal 7 via the negative electrode lead 14.

It is preferred that the positive electrode 31 and the inorganic particle-containing layer 32, or the negative electrode 33 and the inorganic particle-containing layer 32 be the electrode body according to the first embodiment.

As an electrolyte, a non-aqueous electrolyte containing an electrolyte salt and a non-aqueous solvent present in the exterior material 11 can be used. As an electrolyte, in addition to a non-aqueous electrolyte, an aqueous electrolyte solution can be used. As an electrolyte, a gel-based electrolyte can also be used. It is preferable that a viscosity of an electrolytic solution at -20°C be 50 mPa·s or less. When higher than 50 mPa·s, an impregnation property of an electrolytic solution into pores of the inorganic particle-containing layer 32 is reduced, so that battery characteristics are difficult to improve when a viscosity of an electrolytic solution is too high even when physical properties of the inorganic particle-containing layer 32 are satisfied. More specifically, it is preferred that a viscosity of an electrolytic solution at -20°C be 21 mPa·s or more and 50 mPa·s or less. As an electrolyte salt, lithium salts such as LiPF₆, LiBF₄, Li(CF₃SO₂)₂N (bis trifluoromethanesulfonyl amide lithium; commonly called LiTFSI), LiCF₃SO₃ (commonly called LiTFS), Li(C₂F₅SO₂)₂N (bis pentafluoroethane sulfonyl amido lithium; commonly called LiBETI), LiClO₄, LiAsF₆, LiSbF₆, lithium bisoxalato borate {LiB(C₂O₄)₂, commonly called; LiBOB}, and difluoro (trifluoro-2-oxide-2-trifluoro-methylpropionato (2-)-0,0) lithium borate {LiBF₂OCOOC(CF₃)₂, commonly called; LiBF₂(HHIB)} can be used. These electrolyte salts may be used alone or in combination of two or more types thereof. In particular, LiPF₆ and LiBF₄ are preferred. For lithium salts, supporting salts that conduct ions can be used. For example, lithium hexafluorophosphate (LiPF₆), lithium tetrafluoroborate, and imide-based supporting salts may be included. One or two or more types of lithium salts may be contained.

It is preferred that a concentration of an electrolyte salt be within a range of 1 mol/L or more and 3 mol/L or less, and it is more preferred that the concentration be within a range of 1 mol/L or more and 2 mol/L or less. Such a regulation on electrolyte concentrations makes it possible to further improve performance when a high load current is applied while suppressing an influence of increasing concentration of electrolyte salts on increasing viscosity.

A non-aqueous solvent is not particularly limited, but for example, cyclic carbonates such as propylene carbonate (PC) or ethylene carbonate (EC), linear carbonates such as diethyl carbonate (DEC), dimethyl carbonate (DMC), methyl ethyl carbonate (MEC), or dipropyl carbonate (DPC), 1,2-dimethoxyethane (DME), γ-butyrolactone (GBL), tetrahydrofuran (THF), 2-methyltetrahydrofuran (2-MeHF), 1,3-dioxolane, sulfolane, and acetonitrile (AN) can be used. These solvents may be used alone or in combination of two or more types thereof. A non-aqueous solvent containing cyclic carbonates and/or linear carbonates is preferred Polymer materials contained in a non-aqueous gel electrolyte may include, for example, polyvinylidene fluoride (PVdF), polyacrylonitrile (PAN), polyethylene oxide (PEO), and polymethacrylate.

Electrolyte salts contained in an aqueous solution may include, for example, LiCl, LiBr, LiOH, Li₂SO₄, LiNO₃, LiN(SO₂CF₃)₂ (lithium trifluoromethanesulfonylamide; commonly called LiTFSA), LiN(SO₂C₂F₅)₂ (lithium bis pentafluoroethane sulfonylamide; commonly called LiBETA), LiN(SO₂F)₂ (lithium bis fluorosulfonylamide; commonly called LiFSA), and LiB[(OCO)₂]₂. Types of lithium salts to be used can be set at one or two or more. Polymer materials contained in an aqueous gel electrolyte may include, for example, polyvinylidene fluoride (PVdF), polyacrylonitrile (PAN), polyethylene oxide (PEO), and polymethacrylate.

It is preferred that a concentration of an aqueous electrolyte salt be 1 mol/L or more and 12 mol L/L, and 2 mol/L or more and 10 mol/L or less is more preferred. In order to suppress electrolysis of an electrolytic solution, LiOH or Li₂SO₄ can be added to adjust a pH. It is preferred that a pH value be 3 or more and 13 or less, and it is more preferred that a pH value be within a range of 4 or more and 12 or less.

The positive electrode lead 13 is, as illustrated in FIGS. 5 and 6, a conductive member that physically connects the positive electrode terminal 16 and the positive electrode backup lead 18. The positive electrode lead 13 is a conductive member such as aluminum or an aluminum alloy. It is preferred that the positive electrode lead 13 and the positive electrode backup lead 18 be joined by, for example, laser welding.

The negative electrode lead 14 is, as illustrated in FIGS. 5 and 6, a conductive member that physically connects the negative electrode terminal 7 and the negative electrode backup lead 19. The negative electrode lead 14 is a conductive member such as aluminum or an aluminum alloy. It is preferred that the negative electrode lead 14 and the negative electrode backup lead 19 be joined by, for example, laser welding.

The lid 15 is, as illustrated in FIGS. 3 to 6, a lid of the exterior material 11 housing the wound-type electrode group 12 and has the positive electrode terminal 16 and the negative electrode terminal 17. The lid 15 includes the positive electrode terminal 16, the negative electrode terminal 17, the negative electrode insulating cover 21, the positive electrode gasket 22, the negative electrode gasket 23, the safety valve 24, and an electrolytic solution inlet 25. The lid 15 is a molded member made from metal or alloy such as aluminum, aluminum alloy, iron, or stainless steel. It is preferred that the lid 15 and the exterior material 11 be laser-welded or adhered with a sealing material such as adhesive resin.

The positive electrode terminal 16 is, as illustrated in FIGS. 3 to 6, an electrode terminal, provided on the lid 15, for the positive electrode of the secondary battery. The positive electrode terminal 16 is formed of a conductive member such as aluminum or aluminum alloy. The positive electrode terminal 16 is fixed on the lid 15 via the insulating positive electrode gasket 22. The positive electrode terminal 16 is electrically connected to the positive electrode 31 via the positive electrode lead 13 and the positive electrode backup lead 18.

The negative electrode terminal 17 is, as illustrated in FIGS. 3 to 6, an electrode terminal, provided on the lid 15, for the negative electrode of the secondary battery. The negative electrode terminal 17 is formed of a conductive member such as aluminum or aluminum alloy. The negative electrode terminal 17 is fixed on the lid 15 via the insulating negative electrode gasket 23. The negative electrode terminal 17 is electrically connected to the negative electrode 33 via the negative electrode lead 14 and the negative electrode backup lead 19.

The positive electrode backup lead 18 is, as illustrated in FIGS. 3 to 6, a conductive member that bundles the positive electrode current collecting tab and is fixed to the positive electrode lead 13. It is preferred that the positive electrode backup lead 18 and the positive electrode current collecting tab be joined by ultrasonic bonding.

The negative electrode backup lead 19 is, as illustrated in FIGS. 3 to 6, a conductive member that bundles the negative electrode current collecting tab and is fixed to the negative electrode lead 14. It is preferred that the negative electrode backup lead 19 and the negative electrode current collecting tab be joined by ultrasonic bonding.

The positive electrode insulating cover 20 is, as illustrated in FIG. 4, an insulating member that covers the positive electrode lead 13 and the positive electrode backup lead 18. The positive electrode insulating cover 20 has one end portion including the positive electrode current collecting tab of the wound-type electrode group 12 fit thereinto. It is preferred that the positive electrode insulating cover 20 be an insulating heat-resistant member. As the positive electrode insulating cover 20, for example, a resin molded body, a molded body of a material mainly made from paper, or a member obtained by coating a molded body of a material mainly made from paper with a resin are preferred. As a resin, it is preferred that a polyethylene resin or a fluorine resin be used. A shape of the positive electrode insulating cover 20 is such that the positive electrode lead 13 and the positive electrode backup lead 18 are in contact with the exterior material 11. By using the positive electrode insulating cover 20, the positive electrode 31 and the exterior material 11 can be insulated, and a current collecting tab region (current collecting tab, lead, backup lead) can be protected from external impact.

The negative electrode insulating cover 21 is, as illustrated in FIG. 4, an insulating member that covers the negative electrode lead 14 and the negative electrode backup lead 19. The negative electrode insulating cover 21 has one end portion including the negative electrode current collecting tab of the wound-type electrode group 12 fit thereinto. Materials and shapes, for example, of the negative electrode insulating cover 21 are in common with those of the positive electrode insulating cover 10. Common descriptions between the positive electrode insulating cover 20 and the negative electrode insulating cover 21 are omitted.

The positive electrode gasket 22 is, as illustrated to FIGS. 3 to 6, a member that insulates the positive electrode terminal 16 from the exterior material 11. It is preferred that the positive electrode gasket 12 be a solvent-resistant, flame-retardant resin molded body. For the positive electrode gasket 22, for example, a polyethylene resin or a fluorine resin is used.

The negative electrode gasket 23 is, as illustrated to FIGS. 3 to 6, a member that insulates the negative electrode terminal 17 from the exterior material 11. It is preferred that the negative electrode gasket 23 be a solvent-resistant, flame-retardant resin molded body. For the negative electrode gasket 23, for example, a polyethylene resin or a fluorine resin is used.

The safety valve 24 is, as illustrated in FIGS. 3 to 6, a member that is provided on the lid and that functions as a pressure reducing valve that reduces a pressure in the exterior material 11 when an internal pressure in the exterior material 11 increases. The safety valve 24 is preferably provided but can be omitted in consideration of conditions such as a battery protection mechanism and an electrode material.

The electrolytic solution inlet 25 is, as illustrated in FIGS. 3 to 6, a hole for injecting an electrolytic solution. After injecting an electrolytic solution, it is preferred that the electrolytic solution inlet 25 be sealed with a resin, for example.

Although not illustrated in the drawings, it is preferred that each member be fixed or connected using an insulating adhesive tape.

### (Fourth Embodiment)

Hereinafter, an embodiment will be described with reference to the drawings. A battery module according to a fourth embodiment includes one or more secondary batteries (i.e., single cells) according to the third embodiment. When the battery module includes a plurality of single cells, each of the single cells is electrically connected in series, in parallel, or in series and in parallel.

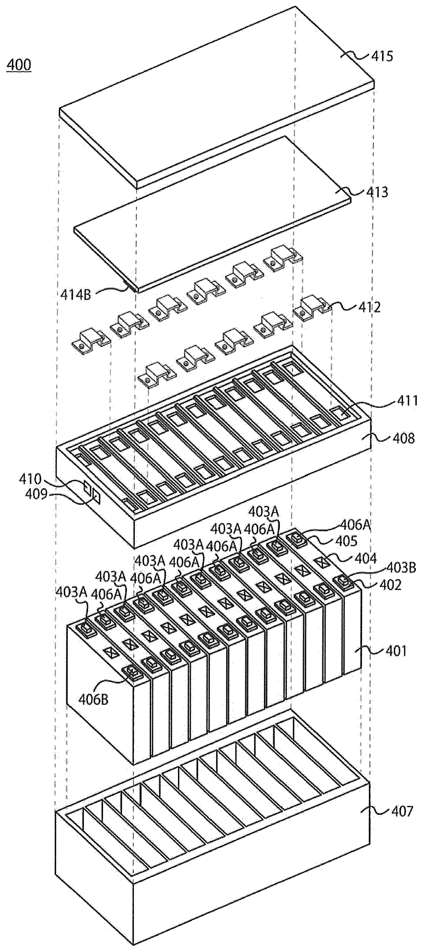

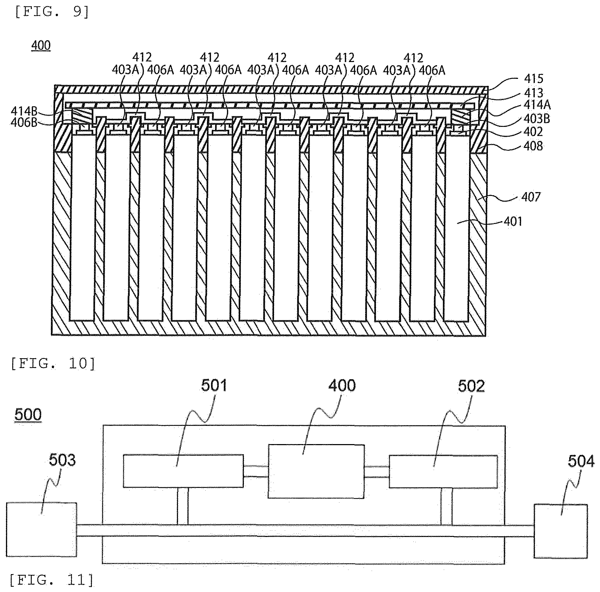

A battery module 400 will be specifically described below with reference to a perspective development view of FIG. 8 and a cross-sectional view of FIG. 9. In the battery module 400 illustrated in FIG. 8, the secondary battery 300 illustrated in FIG. 3 is used as a single cell 401. The cross-sectional view of FIG. 9 is a cross-section including a positive electrode terminal 403B and a negative electrode terminal 406B in the perspective development view of FIG. 8.

A plurality of single cells 401 has, outside an outer can of each cell, a positive electrode terminal 403 (403A, 403B) provided on a positive electrode gasket 402, a safety valve 404, and a negative electrode terminal 406 (406A, 406B) provided on a negative electrode gasket 405. The single cells 401 illustrated in FIG. 8 are disposed so as to be alternately lined up. The single cells 401 illustrated in FIG. 9 are connected in series but may be connected in parallel by, for example, changing a layout method.

The single cells 401 are housed in a lower case 407 and an upper case 408. The upper case 408 is provided with power supply input/output terminals 409 and 410 (a positive electrode terminal 409 and a negative electrode terminal 410) of the battery module. The upper case 408 is provided with openings 411 in accordance with positions of the positive electrode terminal 403 and the negative electrode terminal 406 of each single cell 401 and has the positive electrode terminal 403 and the negative electrode terminal 406 exposed from each of the openings 411. The exposed positive electrode terminal 403A is connected to the negative electrode terminal 406A of an adjacent single cell 401 by a bus bar 412, and the exposed negative electrode terminal 406A is connected to the positive electrode terminal 403A of the adjacent single cell 401 on an opposite side of the adjacent side described above by the bus bar 412. The positive electrode terminal 403B not connected by the bus bar 412 is connected to a positive electrode terminal 414A provided on a substrate 413, and the positive electrode terminal 414A is connected to the positive electrode power supply input/output terminal 409 via a circuit on the substrate 413. Further, the negative electrode terminal 406B not connected by the bus bar 412 is connected to a negative electrode terminal 414B provided on the substrate 413, and the negative electrode terminal 414B is connected to the negative electrode power supply input/output terminal 410 via the circuit on the substrate 413. The power supply input/output terminals 409 and 410 are connected to a charging power supply and a load (not illustrated) to charge and use the battery module 400. The upper case 408 is sealed by a lid 415. It is preferred that the substrate 413 be provided with a protective circuit for charging and discharging. In addition, it is possible to appropriately add a configuration, for example, where information such as deterioration of the single cell 401 can be output from a terminal (not illustrated).

### (Fifth Embodiment)

The battery module according to the embodiment can be mounted on a power storage device 500. The power storage device 500 illustrated in a conceptual view of FIG. 10 includes the battery module 400, an inverter 502, and a converter 501. An external AC power supply 503 is DC converted by the converter 501 to charge the battery module, DC power supply from the battery module is AC converted by the inverter 502, and electricity is supplied to a load 504. By using the power storage device 500 with the present configuration having the battery module 400 according to the embodiment, a power storage device excellent in battery characteristics is provided.

### (Sixth Embodiment)

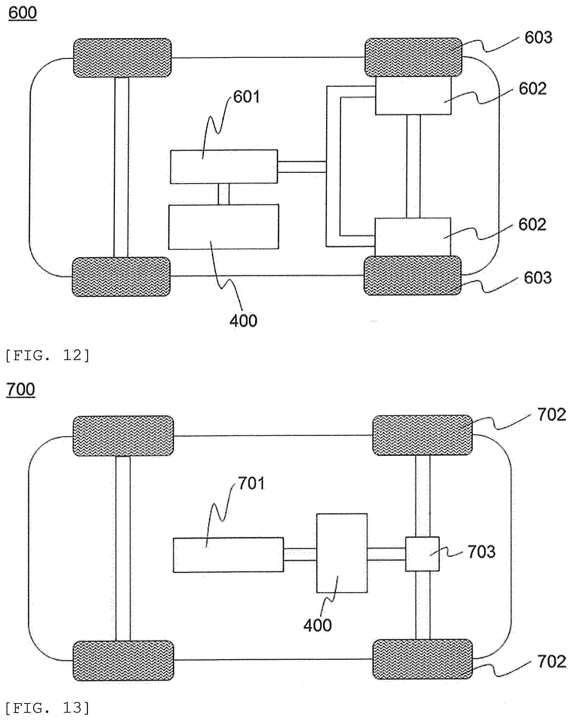

The battery module 400 according to the embodiment can be mounted on a vehicle 600. The vehicle 600 illustrated in a conceptual view of FIG. 11 includes at least the battery module 400, an inverter 601, motors 602, and wheels 603. A DC power supply from the battery module 400 is AC converted by an inverter to drive the motors 602 by the AC power supply. When using a motor driven by direct current, the inverter is omitted. In the figure, a charging mechanism, for example, of the battery module is omitted. A driving force of the motors 602 can rotate the wheels 603. The vehicle 600 also includes an electric vehicle such as a train and a hybrid vehicle having other drive sources such as an engine. The battery module 400 may be charged by regenerative energy from the motors 602. Electrical energy from the battery module drives not only motors but may be used, as illustrated in a conceptual view of FIG. 12, as a power source for operating an electrical device 701 of a vehicle 700. In a case of the vehicle 700 illustrated in the conceptual view of FIG. 12, for example, it is preferred that a generator 703 such as motors attached to axle portions of wheels 702 be operated during deceleration of the vehicle to obtain regenerative energy and the battery module 400 be charged using the obtained regenerative energy.

### (Seventh Embodiment)

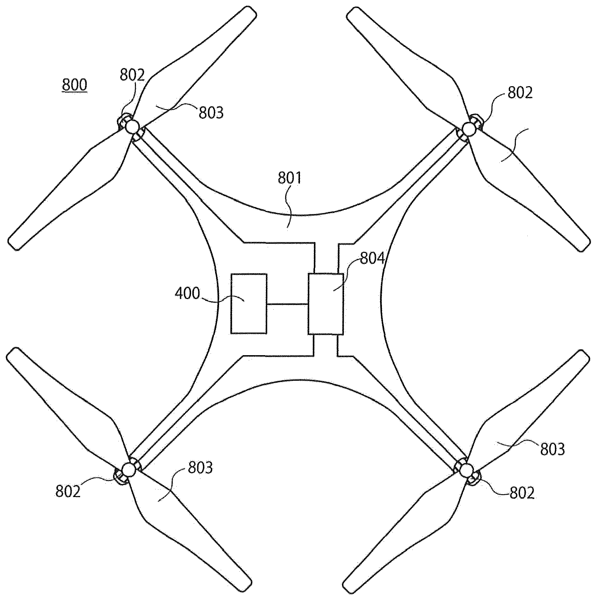

A seventh embodiment relates to a flying object (e.g., a multi-copter). The flying object according to the seventh embodiment uses the battery module 400 according to the fourth embodiment. A configuration of the flying object according to the present embodiment will be briefly described using a schematic view of a flying object (quadcopter) 800 of FIG. 13. The flying object 800 includes a battery module 800, an aircraft frame 801, motors 802, rotary wings 803, and a control unit 804. The battery module 400, the motors 802, the rotary wings 803, and the control unit 804 are disposed in the aircraft frame 801. The control unit 804 converts power output from the battery module 400 and adjusts output. The motors 802 rotate the rotary wings 803 using the power output from the battery module 400. By using the flying object 800 with the present configuration having the battery module 400 according to the embodiment, a flying object excellent in battery characteristics is provided.

### [Examples]

The present invention will be described in more detail by providing examples below, but the present invention is not limited to the examples listed below as long as the gist of the invention is not exceeded.

### [Example 1]

In Example 1, according to procedures described below, a secondary battery with a structure similar to one of the secondary battery 300 illustrated in FIGS. 3 to 6 including the wound-type electrode group 12 illustrated in FIG. 7 was produced.

### [Production of positive electrodes]

First, as a positive electrode active material, lithium nickel cobalt manganese complex oxide LiNi_{1/3}Co_{1/3}Mn_{1/3}O₂ and lithium cobalt complex oxide LiCoO₂ were prepared. These were mixed such that LiNi_{1/3}Co_{1/3}Mn_{1/3}O₂ and LiCoO₂ were 2 : 1 to obtain an active material mixture. This active material mixture, acetylene black as a conductive agent, graphite as a further conductive agent, and polyvinylidene fluoride as a binder were mixed at a mass ratio of 100 : 2 : 3 : 3. A mixture thus obtained was added to N-methyl-2-pyrrolidone as a solvent, and this was kneaded and stirred by a planetary mixer to produce a positive electrode slurry.

Next, a band-shaped aluminum foil having a thickness of 20 µm as a positive electrode current collector was prepared. The positive electrode slurry previously produced was applied to both sides of this aluminum foil. At this time, a portion where the positive electrode slurry was not applied was left along one long side of the aluminum foil.

Then, a coating film thus obtained was dried. Subsequently, the dried coating film and the aluminum foil were rolled by a roll press. Thus, a positive electrode that includes a positive electrode current collector including a positive electrode tab and a positive electrode mixture layer formed on a surface of the positive electrode current collector was obtained.

### [Production of negative electrodes]

First, as a negative electrode active material, lithium titanate Li₄Ti₅O₁₂ was prepared. This active material, graphite as a conductive agent, and polyvinylidene fluoride as a binder were mixed at a mass ratio of 100 : 15 : 4. A mixture thus obtained was added to N-methyl-2-pyrrolidone as a solvent, and this was kneaded and stirred by a planetary mixer to produce a negative electrode slurry.

Next, a band-shaped aluminum foil having a thickness of 20 µm as a negative electrode current collector was prepared. The negative electrode slurry previously produced was applied to both sides of this aluminum foil. At this time, a portion where the negative electrode slurry was not applied was left along one long side of the aluminum foil.

Then, a coating film thus obtained was dried. Subsequently, the dried coating film and the aluminum foil were rolled by a roll press. Thus, a negative electrode that includes a negative electrode current collector including a negative electrode tab and a negative electrode layer formed on a surface of a negative electrode current collector 12a was obtained.

### [Production of inorganic particle-containing layer]

On the other hand, as inorganic particles, particles of aluminum oxide (Al₂O₃: alumina) having an average particle diameter d2 of 0.9 µm were prepared. These inorganic particles were mixed with PVdF as a binder to obtain a mixture. In the mixture, a first mixture in which a compounding ratio of inorganic particles : PVdF was 96% by mass : 4% by mass and a second mixture in which the compounding ratio of inorganic particles : PVdF was 99% by mass : 1% by mass were obtained. Next, NMP was added to each of the obtained mixtures to adjust an inorganic particle-containing first slurry and an inorganic particle-containing second slurry.

Next, the inorganic particle-containing first slurry of the adjusted first mixture was applied to a surface of the negative electrode layer previously produced by a gravure method. A coating amount was adjusted such that a film thickness after drying was 5 µm. Thereafter, the inorganic particle-containing second slurry of the second mixture was applied, and a coating film obtained by coating was dried. Thus, an inorganic particle-containing layer bonded to the surface of the negative electrode layer was obtained. The obtained inorganic particle-containing layer had a total film thickness of 6 µm.

According to the above procedure, the negative electrode of Example 1 including the negative electrode layer and the inorganic particle-containing layer bonded to the surface of the negative electrode layer was obtained. In the negative electrode of Example 1, the negative electrode current collector included an aluminum foil exposed portion for current collection.

### [Production of wound-type electrode groups]

The negative electrode with the inorganic particle-containing layer formed on the surface and the positive electrode previously produced were laminated in this order to obtain a laminate. Next, this laminate was transferred to a winding device, and the entire laminate was folded and wound in a spiral. A wound body thus obtained was pressed to obtain a flat-shaped wound-type electrode group with the structure illustrated in FIG. 7.

### [Assembly of battery units]

Each member described with reference to FIGS. 3 to 7 was prepared, and a battery unit having a structure similar to one of the secondary battery illustrated in FIGS. 3 to 6 was produced by a procedure below.

First, an insulator was disposed on a rear surface of an aluminum lid. Next, a head portion of a positive electrode terminal was disposed on an upper face of the lid via an insulating gasket, and a shaft portion of the positive electrode terminal was inserted into one through-hole of the lid and a through-hole of the insulator. Similarly, a head portion of the negative electrode terminal was disposed on the upper face of the lid via an insulating gasket, and a shaft portion was inserted into the other through-hole of the lid and a through-hole of the insulator. Thus, a lid as illustrated in FIGS. 4 and 5 was obtained.

Next, a positive electrode current collecting tab of the wound-type electrode group previously produced was sandwiched between positive electrode backup leads, and in this state, the positive electrode current collecting tab, the positive electrode backup lead, and a positive electrode lead were welded. Similarly, a negative electrode current collecting tab of the wound-type electrode group was sandwiched between negative electrode backup leads, and in this state, the negative electrode current collecting tab, the negative electrode backup lead, and a negative electrode lead were welded. Next, the positive electrode terminal was crimped and fixed to a connection plate of the positive electrode lead. Similarly, the negative electrode terminal was crimped and fixed to a connection plate of the negative electrode lead. Thus, the electrode group and the lid were integrated.

Next, a positive electrode insulating cover was placed on the positive electrode lead and the positive electrode tab so as to fix them. Similarly, a negative electrode insulating cover was placed on the negative electrode lead and the negative electrode tab so as to fix them. Then, these insulating members were respectively fixed with an insulating tape.

The insulating members thus fixed, a unit of the positive electrode lead and the positive electrode tab, the insulating cover, and a unit of the negative electrode lead and the negative electrode tab were inserted into an outer can made from aluminum. Next, the lid was welded to an opening of the outer can by laser to produce a battery unit (secondary battery before electrolyte injection). The produced battery unit had a rectangular parallelepiped shape with a width of 10 cm, a height of 10 cm, and a thickness of 2.5 cm.

### [Adjustment of non-aqueous electrolytes]

A non-aqueous solvent was adjusted by mixing ethylene carbonate and dimethyl carbonate at a ratio of 1 : 1. In this non-aqueous solvent, lithium hexafluorophosphate LiPF₆ as an electrolyte was dissolved to a concentration of 1 mol/L. Thus, a non-aqueous electrolyte was obtained.

### [Injection of non-aqueous electrolytes and completion of secondary batteries]

The adjusted non-aqueous electrolyte was injected into the battery unit from an electrolytic solution inlet of the lid. After injection, an aluminum sealing member was fitted into the inlet, and a periphery of the sealing member was welded to the lid. Thus, the secondary battery of Example 1 was completed.

The battery was disassembled, the electrode group was taken out, the electrode containing the inorganic particle-containing layer was taken out, and the electrolyte was washed off with ethyl methyl carbonate. Thereafter, the ethyl methyl carbonate was dried and cut using a SAICAS. When peaks of C in a vicinity of the surface and in a vicinity of an interface were measured by an XPS, an area strength C_{A} of C in the vicinity of the surface was 372, an area strength F_{A} of F in the vicinity of the surface was 8768, an area strength C_{B} of C in the vicinity of the interface was 2145, an area strength F_{B} of F in the vicinity of the interface was 24462, and an area strength C_{C} of C in a vicinity of a center was 1325. Therefore, C_{B}/C_{A} was 5.77, (C_{C}-C_{B})/(C_{A}-C_{B}) was 0.46, and F_{B}/F_{A} was 2.8.

This secondary battery was subjected to 1000 cycles of charge and discharge cycle tests in a 40°C atmosphere. In the charge and discharge cycle, constant current charging was performed at 1 C to 2.8 V, then constant voltage charging was performed until a current value became 0.01 C, and constant current discharging was repeatedly performed until a voltage became 1.3 V at 1 C. There was a 30-minute rest between charging and discharging. When resistances at 25°C before and after this charge and discharge cycle test were measured, a rate of change in resistance was 125%. Table 1 summarizes, for example, XPS area strengths and rates of change in resistance in examples and comparative examples.

### (Example 2)

In Example 2, carboxymethylcellulose (CMC) and styrene butadiene rubber (SBR) were used for a binder of inorganic particles. A compounding ratio of a first mixture was adjusted such that inorganic particles : CMC : SBR was 95% by mass : 1% by mass : 4% by mass, and a compounding ratio of a second mixture was adjusted such that inorganic particles : CMC : SBR was 98% by mass : 1% by mass : 1% by mass. Then, except that an inorganic particle-containing first slurry was applied such that a thickness after drying was 5 µm and an inorganic particle-containing second slurry was applied such that a thickness after drying was 1 µm, a secondary battery in Example 2 was produced in a procedure similar to one in Example 1. Carboxymethylcellulose is a water-soluble binder and works as a dispersant. The styrene butadiene rubber binder is a binder dispersible in water. As with Example 1, an XPS and rates of change in resistance were measured.

### (Example 3)

In Example 3, except that the compounding ratio of the first mixture was adjusted such that inorganic particles : CMC : SBR was 94.5% by mass : 1% by mass : 4.5% by mass, a secondary battery in Example 3 was produced in a manner similar to one in Example 2. As with Example 1, an XPS and rates of change in resistance were measured.

### (Example 4)

In Example 4, except that the compounding ratio of the first mixture was adjusted such that inorganic particles : CMC : SBR was 95% by mass : 1% by mass : 4% by mass and the compounding ratio of the second mixture was adjusted such that inorganic particles : CMC : SBR was 97% by mass : 1% by mass : 2% by mass, a secondary battery in Example 4 was produced in a manner similar to one in Example 2. As with Example 1, an XPS and rates of change in resistance were measured.

### (Example 5)

In Example 5, except that the inorganic particle-containing first slurry was applied such that the thickness after drying was 4 µm and the inorganic particle-containing second slurry was applied such that the thickness after drying was 2 µm, a secondary battery in Example 5 was produced in a manner similar to one in Example 2. As with Example 1, an XPS and rates of change in resistance were measured.

### (Example 6)

In Example 6, except that the compounding ratio of the first mixture was adjusted to be inorganic particles : PVdF = 97% by mass : 3% by mass and the compounding ratio of the second mixture was adjusted to be inorganic particles : PVdF = 98% by mass : 2% by mass, a secondary battery in Example 6 was produced in a manner similar to one in Example 1. As with Example 1, an XPS and rates of change in resistance were measured.

### (Example 7)

In Example 7, except that the compounding ratio of the second mixture was adjusted to be inorganic particles : PVdF = 99.5% by mass : 0.5% by mass, a secondary battery in Example 7 was produced in a manner similar to one in Example 1. As with Example 1, an XPS and rates of change in resistance were measured.

### (Example 8)

In Example 8, except that the inorganic particle-containing first slurry was applied such that the thickness after drying was 8 µm and the inorganic particle-containing second slurry was applied such that the thickness after drying was 2 µm, a secondary battery in Example 8 was produced in a manner similar to one in Example 2. As with Example 1, an XPS and rates of change in resistance were measured.

### (Example 9)

In Example 9, except that the inorganic particle-containing first slurry was applied such that the thickness after drying was 1.6 µm and the inorganic particle-containing second slurry was applied such that the thickness after drying was 0.4 µm, a secondary battery in Example 9 was produced in a manner similar to one in Example 2. As with Example 1, an XPS and rates of change in resistance were measured.

### (Example 10)

In Example 10, except that the compounding ratio of the first mixture was adjusted such that inorganic particles : CMC : SBR was 97% by mass : 1% by mass : 2% by mass and the compounding ratio of the second mixture was adjusted such that inorganic particles : CMC : SBR was 98.5% by mass : 1% by mass : 0.5% by mass, a secondary battery in Example 10 was produced in a manner similar to one in Example 2. As with Example 1, an XPS and rates of change in resistance were measured.

### (Example 11)

In Example 11, except that the compounding ratio of the first mixture was adjusted such that inorganic particles : CMC : SBR was 93 mass% : 1 mass% : 6 mass% and the compounding ratio of the second mixture was adjusted such that inorganic particles : CMC : SBR was 97% by mass : 1% by mass : 2% by mass, a secondary battery in Example 11 was produced in a manner similar to one in Example 10. As with Example 1, an XPS and rates of change in resistance were measured.

### (Example 12)

In Example 12, except that the compounding ratio of the first mixture was adjusted such that inorganic particles : CMC : SBR was 96 mass% : 1 mass% : 3 mass% and the compounding ratio of the second mixture was adjusted such that inorganic particles : CMC : SBR was 98.5 mass% : 1 mass% : 0.5 mass%, a secondary battery in Example 11 was produced a manner similar to one in Example 2. As with Example 1, an XPS and rates of change in resistance were measured.

### (Comparative Example 1)

In Comparative Example 1, except that only the inorganic particle-containing first slurry was applied to form an inorganic particle-containing layer having a thickness of 6 µm, a secondary battery in Comparative Example 1 was produced in a manner similar to one in Example 2. As with Example 1, an XPS and rates of change in resistance were measured.

### (Comparative Example 2)

In Comparative Example 2, except that the compounding ratio of the first mixture was adjusted such that inorganic particles : CMC : SBR was 95% by mass : 1% by mass : 4% by mass and the compounding ratio of the second mixture was adjusted such that inorganic particles : CMC : SBR was 98.9% by mass : 1% by mass : 0.1% by mass, a secondary battery in Comparative Example 2 was produced in a manner similar to one in Example 2. As with Example 1, an XPS and rates of change in resistance were measured.

### (Comparative Example 3)

In Comparative Example 3, except that the compounding ratio of the first mixture was adjusted such that inorganic particles : PVdF was 96% by mass : 4% by mass and the compounding ratio of the second mixture was adjusted such that inorganic particle : PVdF was 99.9% by mass : 0.1% by mass, a secondary battery in Comparative Example 3 was produced in a manner similar to one in Example 1. As with Example 1, an XPS and rates of change in resistance were measured.

### (Comparative Example 4)

In Comparative Example 4, except that only the inorganic particle-containing first slurry was applied to form an inorganic particle-containing layer having a thickness of 6 µm, a secondary battery in Comparative Example 4 was produced in a manner similar to one in Example 1. As with Example 1, an XPS and rates of change in resistance were measured.

**[Table 1]**

| | CA | CB | CC | FA | FB | CB/CA | (CC-CB)/(CA-CB) | FB/FA | RATE OF INCREASE IN RESISTANCE DURING CYCLE TESTS[%] |
|---|---|---|---|---|---|---|---|---|---|
| EXAMPLE 1 | 372 | 2145 | 1325 | 8768 | 24462 | 5.77 | 0.46 | 2.8 | 125 |
| EXAMPLE 2 | 354 | 2987 | 1788 | - | - | 8.44 | 0.46 | - | 124 |
| EXAMPLE 3 | 298 | 2974 | 1798 | - | - | 9.98 | 0.44 | - | 116 |
| EXAMPLE 4 | 1325 | 2678 | 2054 | - | - | 2.02 | 0.46 | - | 121 |
| EXAMPLE 5 | 345 | 2586 | 2364 | - | - | 7.5 | 0.1 | - | 114 |
| EXAMPLE 6 | 325 | 2684 | 1678 | 10264 | 12567 | 8.26 | 0.43 | 1.2 | 120 |
| EXAMPLE 7 | 356 | 2846 | 1879 | 1298 | 25896 | 7.99 | 0.39 | 20 | 113 |
| EXAMPLE 8 | 348 | 2468 | 1398 | - | - | 7.09 | 0.5 | - | 127 |
| EXAMPLE 9 | 326 | 2045 | 1547 | - | - | 6.27 | 0.29 | - | 112 |
| EXAMPLE 10 | 96 | 534 | 456 | - | - | 5.56 | 0.18 | - | 111 |
| EXAMPLE 11 | 452 | 3456 | 2458 | - | - | 7.65 | 0.33 | - | 128 |
| EXAMPLE 1 2 | 324 | 2354 | 1568 | - | - | 7.27 | 0.39 | - | 114 |
| COMPARATIVE EXAMPLE 1 | 1345 | 1879 | 1456 | - | - | 1.4 | 0.79 | - | 189 |
| COMPARATIVE EXAMPLE 2 | 165 | 1894 | 1564 | - | - | 11.48 | 0.19 | - | PEELING OF INORGANIC PARTICLE-CONTAINING LAYER |
| COMPARATIVE EXAMPLE 3 | 356 | 2648 | 1678 | 1124 | 24568 | 7.44 | 0.42 | 21.9 | PEELING OF INORGANIC PARTICLE-CONTAINING LAYER |
| COMPARATIVE EXAMPLE 4 | 368 | 2597 | 1648 | 11264 | 12145 | 7.06 | 0.43 | 1.1 | 195 |

From results illustrated in Table 1, it can be seen that secondary batteries 100 in Examples 1 to 12 were able to suppress rises in resistance.

Specifically, it is understood, from the results illustrated in Table 1, that the secondary batteries 100 in Examples 1 to 12 had smaller increases in resistance than secondary batteries in Comparative Examples 1 and 4. A reason why a resistance of the secondary battery of Comparative Example 1 was higher than ones of the secondary batteries 100 in Examples 1 to 13 is thought to be that a binder present at the interface between the inorganic particle-containing layer and an electrode mixture layer was large in volume and thus affected the electrode mixture layer. A reason why the inorganic particle-containing layer of Comparative Examples 2 and 3 peeled from an electrode layer is thought to be that the binder present at the interface between the inorganic particle-containing layer and the electrode mixture layer was small in volume, so that an adhesive strength at the interface between the inorganic particle-containing layer and the electrode mixture layer was weak.

In the specification, some of the elements are represented only by element symbols.

While some embodiments of the present invention have been described above, these embodiments have been presented as examples and are not intended to limit the scope of the invention. These embodiments can be implemented in other various forms, and various omissions, substitutions, and modifications can be made without departing from the spirit of the invention. These embodiments and their modifications, as would fall within the scope and spirit of the invention, are included in the invention provided in the claims and the scope of equivalents thereof.

### [Explanations of Letters or Numerals]

100 electrode body
1 current collector
2 electrode mixture layer
3 inorganic particle-containing layer
200 electrode group
4 positive electrode mixture layer
5 positive electrode current collector
6 negative electrode mixture layer
7 negative electrode current collector
300 secondary battery
11 outer can
12 wound electrode group
13 positive electrode lead
14 negative electrode lead
15 lid
16 positive electrode terminal
17 negative electrode terminal
18 positive electrode backup lead
19 negative electrode backup lead
20 positive electrode insulating cover
21 negative electrode insulating cover
22 positive electrode gasket
23 negative electrode gasket
24 safety valve
25 electrolytic solution inlet
31 positive electrode
32 inorganic particle-containing layer
33 negative electrode
400 battery module
401 single cell
402 positive electrode gasket
403 positive electrode terminal
404 safety valve
405 negative electrode gasket
406 negative electrode terminal
407 lower case
408 upper case
409 power supply input/output terminal (positive electrode terminal)
410 power supply input/output terminal (negative electrode terminal)
411 opening
412 bus bar
413 substrate
414A positive electrode terminal
414B negative electrode terminal
415 lid
500 power storage device
501 inverter
502 converter
503 AC power supply
504 load
600 vehicle
601 inverter
602 motor
603 wheel
700 vehicle
701 electrical device
702 wheel
703 generator
800 flying object
801 aircraft frame
802 motor
803 rotary wing
804 control unit

## Claims

1. An electrode body, comprising:
a current collector;
an electrode mixture layer on the current collector; and
an inorganic particle-containing layer containing inorganic particles and a binder on the electrode mixture layer, wherein
the binder of the inorganic particle-containing layer is segregated on a side of the electrode mixture layer.

2. The electrode body according to claim 1, wherein after cutting the inorganic particle-containing layer with a SAICAS, in performing an XPS measurement, assuming that a C area strength in a vicinity of a surface of the inorganic particle-containing layer is C_{A} and a C area strength in a vicinity of an interface between the inorganic particle-containing layer and the electrode mixture is C_{B}, C_{B}/C_{A} is 1.2 or more and 10 or less.

3. The electrode body according to claim 1 or 2, wherein after cutting the inorganic particle-containing layer with the SAICAS, in performing the XPS measurement, assuming that the C area strength in the vicinity of the surface of the inorganic particle-containing layer is C_{A}, the C area strength in the vicinity of the interface between the inorganic particle-containing layer and the electrode mixture is C_{B}, and a C area strength at a middle point between the vicinity of the surface and the vicinity of the interface of the inorganic particle-containing layer is C_{C}, (C_{C}-C_{B})/(C_{A}-C_{B}) is 0.10 or more and 0.50 or less.

4. The electrode body according to any one of claims 1 to 3, wherein after cutting the inorganic particle-containing layer with the SAICAS, in performing the XPS measurement, assuming that an F area strength in the vicinity of the surface of the inorganic particle-containing layer is F_{A} and an F area strength in the vicinity of the interface of the inorganic particle-containing layer is F_{B}, F_{B}/F_{A} is 1.2 or more and 20 or less.

5. The electrode body according to any one of claims 1 to 4, wherein a thickness of the inorganic particle-containing layer is 1 µm or more and 10 µm or less.

6. The electrode body according to any one of claims 1 to 5, wherein after cutting the inorganic particle-containing layer with the SAICAS, in performing the XPS measurement, assuming that the C area strength in the vicinity of the surface of the inorganic particle-containing layer is C_{A} and the C area strength in the vicinity of the interface between the inorganic particle-containing layer and the electrode mixture is C_{B}, C_{B}/C_{A} is 2.02 or more and 9.98 or less.

7. The electrode body according to any one of claims 1 to 6, wherein after cutting the inorganic particle-containing layer with the SAICAS, in performing the XPS measurement, assuming that the C area strength in the vicinity of the surface of the inorganic particle-containing layer is C_{A}, the C area strength in the vicinity of the interface between the inorganic particle-containing layer and the electrode mixture is C_{B}, and the C area strength at the middle point between the vicinity of the surface and the vicinity of the interface of the inorganic particle-containing layer is C_{C}, (C_{C}-C_{B})/(C_{A}-C_{B}) is 0.10 or more and 0.44 or less.

8. An electrode group comprising the electrode body according to any one of claims 1 to 7.

9. A secondary battery using the electrode group according to claim 8.

10. A battery module using the secondary battery according to claim 9.

11. A vehicle using the battery module according to claim 10.
